(19) Europäisches Patentamt
European Patent Office
Office européen des brevets

(11) **EP 3 575 830 A1**

(12) **EUROPÄISCHE PATENTANMELDUNG**

(43) Veröffentlichungstag:
**04.12.2019 Patentblatt 2019/49**

(51) Int Cl.:
***G01S 13/90*** *(2006.01)*     ***G01S 13/58*** *(2006.01)*

(21) Anmeldenummer: **18174579.5**

(22) Anmeldetag: **28.05.2018**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Gottfried Wilhelm Leibniz Universität Hannover**
**30167 Hannover (DE)**

(72) Erfinder:
• **Sommer, Aron**
**30169 Hannover (DE)**
• **Ostermann, Jörn**
**30655 Hannover (DE)**

(74) Vertreter: **Weidner Stern Jeschke**
**Patentanwälte Partnerschaft mbB**
**Universitätsallee 17**
**28359 Bremen (DE)**

(54) **VERFAHREN ZUM ABSCHÄTZEN EINER OBJEKTGESCHWINDIGKEIT SOWIE VORRICHTUNG UND FLUGGERÄT**

(57) Die Erfindung betrifft ein Verfahren zum Bestimmen einer Objektgeschwindigkeit eines Objekts mittels Daten eines Synthetic-Apertur-Radars, wobei ein Ermitteln eines ersten umgebungsbereinigten Radarbildes und eines zweiten umgebungsbereinigten Radarbildes anhand der Daten des Synthetic-Apertur-Radars erfolgt und das erste umgebungsbereinigte Radarbild und das zweite umgebungsbereinigte den selben Bildausschnitt aufweisen, wobei das zweite umgebungsbereinigte Radarbild aus zweiten Bilddaten mittels eines Backprojection-Verfahrens ermittelt wird, und das Ermitteln des ersten umgebungsbereinigten Radarbilds anhand erster Bilddaten rechentechnisch unter der Annahme erfolgt, dass durch ein Objektgeschwindigkeits-kompensierendes Verschieben des Objekts das erste umgebungsbereinigte Radarbild mit dem zweiten umgebungsbereinigten Radarbild deckungsgleich ist, wobei beim Objektgeschwindigkeitskompensierenden Verschieben die Objektgeschwindigkeit abgeschätzt wird, sodass ein Wert für die Objektgeschwindigkeit vorliegt.

EP 3 575 830 A1

**Beschreibung**

Die Erfindung betrifft ein Verfahren zum Abschätzen einer Objektgeschwindigkeit eines Objekts mittels Daten eines Synthetic-Apertur-Radars sowie eine Vorrichtung und ein Fluggerät.

Synthetic-Apertur-Radare werden häufig an Flugobjekten wie Flugzeugen oder Satelliten angeordnet und scannen zumeist die Erdoberfläche mittels Radar ab. Die Daten an der Antenne des Synthetic-Apertur-Radars werden häufig aufgeteilt, sodass mit einem Synthetic-Apertur-Radar gleichzeitig mehrere (Radar-)Bilder mit Teilabschnitten der physikalischen Antenne gewonnen werden. Die so gewonnenen Daten für die Radarbilder werden entsprechend aufbereitet.

Häufig werden mittels eines Synthetic-Apertur-Radars mehrere, insbesondere zwei oder drei, Radarbilder aus Daten, aufgenommen an unterschiedlichen Stellen der Antenne des Synthetic-Apertur-Radars, ermittelt und entsprechend der Bewegungsbahn des Flugobjekts und mithin des Synthetic-Apertur-Radars rechentechnisch zueinander derart verschoben, dass die Ausschnitte der Radarbilder übereinstimmen. Diese rechentechnische Verschiebung bewirkt zudem, dass die Daten, welche an verschiedenen Stellen der Antenne aufgenommen wurden, derart Verschoben werden, als wären sie an der gleichen örtlichen Position der Antenne aufgenommen worden. Um sich bewegende Objekte in dem Radarbild zu erkennen, werden aus den beispielsweise drei Radarbildern zwei Radarbilder gewonnen, welche um Umgebungsstrukturen, welche statisch sind, bereinigt sind. In diesen um statische Umgebungsstrukturen bereinigten Bildern sind lediglich sich bewegenden Objekte abgebildet. Mithin kann so das sich bewegende Objekt identifiziert werden. Zudem kann aus diesen beiden umgebungsbereinigten Radarbildern die Geschwindigkeit geschätzt werden. Dieses Verfahren wird bereits von beispielsweise Deming et al. angewendet und findet in eingien aktuellen Systemen ihren Einsatz, R.W. Deming et al.: Three-channel processing for improved geo-location performance in SAR-based GMTI interferometry, Published in SPIE Proceedings Vol. 8394: Algorithms for Synthetic Aperture Radar Imagery XIX, 2012.

Die Schätzung der Geschwindigkeit der sich bewegenden Objekte erfolgt dabei vereinfacht durch Subtraktion der beiden Radarbilder, insbesondere durch die Betrachtung der aus der Subtraktion entstehenden Phasendifferenz, aus der typischerweise Informationen über die Geschwindigkeit ermittelt werden. Dabei haben all diese Verfahren die Gemeinsamkeit, dass nur ein Geschwindigkeitswert und eine Bewegungsrichtung pro Aufnahmezeit, typischerweise 0,5 Sekunden oder 1 Sekunde, geschätzt wird.

Der Nachteil bei diesen Verfahren ist, dass die Schätzungen der Objektgeschwindigkeiten unter Umständen sehr ungenau und über die Zeit sprunghaft sein können. Damit liefern solche Verfahren beispielsweise SAR-Bilder, bei denen die fahrenden Autos ca. 10 Meter neben der Fahrbahn abgebildet werden. Unter Umständen werden sich bewegende Objekte sprunghaft abgebildet, wobei augenblickliche Sprünge von mehreren Metern auftreten können.

Aufgabe der Erfindung ist es, den Stand der Technik zu verbessern.

Gelöst wird die Aufgabe durch ein Verfahren zum Bestimmen einer Objektgeschwindigkeit eines Objekts mittels Daten eines Synthetic-Apertur-Radars, wobei ein Ermitteln eines ersten umgebungsbereinigten Radarbildes und eines zweiten umgebungsbereinigten Radarbildes anhand der Daten des Synthetic-Apertur-Radars erfolgt und das erste umgebungsbereinigte Radarbild und das zweite umgebungsbereinigte Radarbild den selben Bildausschnitt aufweisen, wobei das zweite umgebungsbereinigte Radarbild aus zweiten Bilddaten mittels eines Backprojection-Verfahrens ermittelt wird und das Ermitteln des ersten umgebungsbereinigten Radarbilds anhand erster Bilddaten rechentechnisch unter der Annahme erfolgt, dass durch ein Objektgeschwindigkeits-kompensierendes Verschieben des Objekts das erste umgebungsbereinigte Radarbild mit dem zweiten umgebungsbereinigten Radarbild deckungsgleich ist, wobei beim Objektgeschwindigkeits-kompensierenden Verschieben die Objektgeschwindigkeit abgeschätzt wird, sodass ein Wert für die Objektgeschwindigkeit vorliegt.

Somit kann ein Verfahren bereitgestellt werden, mit dem reproduzierbar und mit hoher Qualität die Geschwindigkeit eines Objektes bestimmbar ist.

Folgendes Begriffliche sei erläutert:

Ein "Synthetic-Apertur-Radar (SAR)" gehört insbesondere zur Klasse der abbildenden Radare und kann somit als Sensor zur Fernerkundung verwendet werden. Insbesondere die von derartigen Synthetic-Apertur-Radaren gewonnenen zweidimensionalen Darstellungen eines Geländeausschnittes, welcher durch Abtastung der Erdoberfläche mit elektromagnetischen Wellen ermittelt wird, weisen große Ähnlichkeit mit fotografischen Aufnahmen auf und sind somit grundsätzlich für Betrachter interpretierbar. Zudem können diese Radare bei sämtlichen Witterungsbedingungen eingesetzt werden, da beispielsweise Trübungen der Atmosphäre durch Wolken sowie Regen, Nebel, Dunkelheit und dergleichen nur einen geringen Einfluss auf beispielsweise die verwendeten Mirkowellenstrahlen, bzw. elektromagnetischen Wellen, haben. Insbesondere umfasst der Begriff Synthetic-Apertur-Radar das sogenannte Fokus-Synthetic-Apertur-Radar. Insbesondere werden Phasenunterschiede, die beispielsweise durch Laufzeitunterschiede zwischen den einzelnen Antennenpositionen entstehen, durch einen Signalprozessor ausgeglichen.

Unter einem "Objekt" wird insbesondere ein Gegenstand, wie beispielsweise ein Fahrzeug, ein Flugzeug oder ein Schiff, verstanden, welcher sich innerhalb des aufgenommenen Bereichs mit einer (Objekt)Geschwindigkeit bewegt. Grundsätzlich kann das Objekt auch eine Person oder ein Tier sein. Die Geschwindigkeit, mit dem sich das Objekt bewegt, wird vorliegend "Objektgeschwindigkeit" genannt.

Die "umgebungsbereinigten Radarbilder" werden insbesondere anhand der Rohdaten der Antenne des Synthetic-Apertur-Radars ermittelt. Diese werden zumeist aufbereitet und kalibriert um entsprechende Hardwareungenauigkeiten und/oder Kanalübertragungsfunktionen zu kompensieren. Der Begriff umfasst auch Radarbilder, welche noch umgebungsbereinigt werden müssen und ist somit im Sinne von "umgebungszubereinigende Radarbilder" zu verstehen.

Um die statische Umgebung des Objektes aus den umgebungsbereinigten Radarbildern zu eliminieren wird insbesondere die DPCA-Technik (Displayed-Phase-Center-Antenna-Technik) eingesetzt. Sofern die Radarbilder bereits keinen Hintergrund aufweisen, wie dies beispielsweise der Fall ist, wenn vom Boden himmelwärts Synthetic-Apertur-Radare eingesetzt werden, liegen schon umgebungsbereinigte Radarbilder vor. Andernfalls werden aus mehreren, insbesondere zwei oder drei, Radarbildern des Synthetic-Apertur-Radars, insbesondere mittels DPCA-Verfahren, die umgebungsbereinigten Radarbilder ermittelt. Das DPCA-Verfahren kann sowohl auf die Bilddaten angewendet werden, als auch auf die generierten Radarbilder, um aus zwei Bilddaten, bzw. zwei Radarbildern, ein umgebungsbereinigtes Radarbild zu erzeugen. Nach dem DPCA-Verfahren wird insbesondere das sogenannte Backprojection-Verfahren eingesetzt, um das eigentliche umgebungsbereinigte Radarbild zu generieren. An dieser Stelle sei jedoch darauf hingewiesen, dass auch vorliegend vor diesem Schritt bereits von umgebungsbereinigten Radarbildern im Sinne der Erfindung gesprochen wird.

Das Durchführen der DPCA-Technik kann insbesondere aus C. E. Muehe et al.: Displaced-Phase-Center Antenna Technique, Lincoln Laboratory Journal, Volume 12, Number 2, 2000, und aus G. W. Stimson et al.: Stimson's Introduction to Airborne Radar, 3rd Edition, 2014 entnommen werden, deren diesbezüglicher Inhalt Bestandteil der vorliegend Anmeldung ist.

Das "Backprojection-Verfahren" kann vorliegend der Schrift von A. W. Doerry et al.: Basics of Backprojection Algorithm for Processing Synthetic Aperture Radar Images, 2016 entnommen werden, deren diesbezüglicher Inhalt ist Bestandteil der vorliegenden Anmeldung.

Das "zweite umgebungsbereinigte Radarbild" dient insbesondere als Referenzbild für das erfindungsgemäße Verfahren. So kann das zweite umgebungsbereinigte Radarbild direkt aus den zweiten Bilddaten gewonnen werden. Auch kann das zweite umgebungsbereinigte Radarbild Objektgeschwindigkeits-modifiziert sein, sodass bereits ein Anpassen an die Objektgeschwindigkeit erfolgt ist.

Das "erste umgebungsbereinigte Radarbild" wird insbesondere so modifiziert, dass dieses mit dem zweiten umgebungsbereinigten Radarbild oder entsprechend mit dem Referenzbild deckungsgleich ist. Dies kann in eine einfachen Form durch ein (a priori) Schätzen einer Objektgeschwindigkeit erfolgen. Auch können die Objektdaten, welche beispielsweise mittels CFAR-Detector (siehe M. Richards, Fundamentals of Radar Signal Processing, McGraw Hill, 2005, dessen diesbezüglicher Inhalt Bestandteil dieser Anmeldung ist) aus dem entsprechendem Radarbild, oder entsprechend den Bilddaten identifiziert wurden, direkt verschoben werden oder auch mittels eines modifizierten Backprojection Verfahrens die Radarbilder deckungsgleich gebracht werden.

Die "Daten" des Synthetic-Apertur-Radars sind insbesondere die durch das Synthetic-Apertur-Radar ermittelten Signale sowie sämtliche entsprechend aufbereiteten Folgeinformationen, welche Rohdaten inhärent aufweisen.

"Bilddaten" sind insbesondere die (aufbereiteten) Daten, welche als Ausgangsdaten zum Erzeugen des (umgebungsbereinigten) Radarbildes mittels eines Backprojection-Verfahrens dienen. Somit kann aus den "ersten Bilddaten" das erste umgebungsbereinigte Radarbild und aus den "zweiten Bilddaten" das zweite umgebungsbereinigte Radarbild gewonnen werden.

Unter dem Begriff "rechentechnisch" wird insbesondere eine mathematische Behandlung verstanden, welche rechnergestützt erfolgt. Somit kann die mathematische Behandlung zum Beispiel in Form eines Algorithmus' durch ein Steuergerät oder auch mittels eines FPGA (Field Programmable Gate Array) erfolgen.

Damit das erste umgebungsbereinigte Radarbild und das zweite umgebungsbereinigte Radarbild den selben Bildausschnitt aufweisen, werden diese insbesondere rechentechnisch zueinander Verschoben, sodass die an unterschiedlichen Positionen der Antenne des Synthetic-Apertur-Radars gewonnenen Bilder jeweils denselben Bildausschnitt aufweisen. Zudem verändert die rechentechnische Verschiebung sie Signal derartig, als wären die Signale an derselben Position der Antenne aufgenommen worden. Das diesbezügliche Vorgehen kann C. H. Gierull: Digital Channel Balancing of Along-Track Interferometric SAR Data, Defence R & D Canada, Technical Memorandum, DRDC Ottawa, 2003 entnommen werden, wobei dessen diesbezüglicher Inhalt Bestandteil der vorliegenden Anmeldung ist.

Der "selbe Bildausschnitt" ist insbesondere dann gegeben, wenn eine Repräsentanz des ersten Bildabschnittes im Wesentlichen der Repräsentanz eines zweiten Bildabschnittes entspricht. Gewisse Abweichungen sind tolerierbar, wobei gegebenenfalls beispielsweise bei "Pixelbildern" benachbarte Pixel zueinander interpoliert werden. Unter dem "selben Bildausschnitt" ist insbesondere zu verstehen, dass die Helligkeit (Intensität) und die dazugehörige Phase beider Bilder bei einem pixelweisen Vergleich bei statischen Objekten bis auf Rauschen größtenteils übereinstimmen. Bei sich bewegenden Objekten müssen die Helligkeiten und insbesondere die Phasen der Pixel in beiden Bildern nicht übereinstimmen.

Ein "Abschätzen" auch als Schätzen bezeichnet ist insbesondere ein mathematisches oder auch rechentechnisches Abschätzen anhand dessen eine Annahme zur echten Objektgeschwindigkeit getroffen werden. Dies wird insbesondere durch den "Wert" der Objektgeschwindigkeit beschrieben, wobei der Wert ein Skalar, ein Vektor oder auch eine Matrix sein kann.

Beim "Objektgeschwindigkeits-kompensierende Verschieben" werden im Wesentlichen Bildpunkte des Objektes des ersten umgebungsbereinigten Radarbildes derart verschoben, dass diese mit den Pixeln des zweiten umgebungsbereinigten Radarbildes übereinstimmen. Gleichermaßen ist darunter auch die Suche nach einer Phase zu verstehen, welche den Unterschied zwischen der Phase eines Pixels in einem umgebungsbereinigten Radarbild und der Phase des gleichen Pixels des anderen umgebungsbereinigten Radarbildes beschreibt, welche von der Objektbewegung hervorgerufen wird. Wichtig ist, dass dieses Objektgeschwindigkeits-kompensierende Verschieben nicht im finalen ersten umgebungsbereinigten Radarbild, sondern beim Generieren des ersten umgebungsbereinigten Radarbildes oder davor, beispielsweise durch örtliches Verschieben der ersten Bilddaten, erfolgt.

Ein Kern der Erfindung beruht somit darauf, dass nicht die Objektbilder der (fertig) ermittelten Radarbilder zueinander verschoben werden, sondern, dass ein Radarbild als Referenzbild dient und vor dem finalen Generieren des anderen Radarbildes eine Modifikation erfolgt, sodass dann nach dem finalen Generieren des anderen Radarbildes dieses mit dem Referenzradarbild im Wesentlichen übereinstimmt. Mithin kann implizit jeder Radarpuls, insbesondere jedes einzelne Empfangssignal, selbst zum Bestimmen einer Objektgeschwindigkeit verwendet werden, sodass beispielsweise während einer "Belichtungszeit" von 1s ungefähr 200 Objektgeschwindigkeitswerte ermittelbar sind, welche gemeinsam zur eigentlichen Objektgeschwindigkeit beitragen. Somit werden Sprünge in den Geschwindigkeiten, wie sie nach dem Stand der Technik bekannt sind vermieden.

In einer Ausführungsform werden das erste umgebungsbereinigte Radarbild und das zweite umgebungsbereinigte Radarbild mit einem definierten Zeitversatz ermittelt und/oder wird oder werden das erste umgebungsbereinigte Radarbild und/oder das zweite umgebungsbereinigte Radarbild rechentechnisch derart verschoben, dass das erste umgebungsbereinigte Radarbild und das zweite umgebungsbereinigte Radarbild den selben Bildausschnitt aufweisen.

Insbesondere kann das Objektgeschwindigkeits-kompensierende Verschieben durch ein Verschieben der ersten Bilddaten und/oder durch ein Verwenden eines modifizierten Backprojection-Verfahrens erfolgen, wobei das Verschieben somit quasi durch das modifizierte Backprojection-Verfahren realisiert wird.

Um zeiteffizient und somit ggf. in Echtzeit die Geschwindigkeit bestimmen zu können, kann das Abschätzen der Objektgeschwindigkeit mittels mathematischer Optimierung, insbesondere durch lineare oder nichtlineare Optimierung, insbesondere mittels mathematischer Regularisierung, erfolgen.

Es können somit verschiedene Optimierungsverfahren wie beispielsweise das lineare Optimierungsverfahren "Methode der kleinsten Quadrate" eingesetzt werden.

Bei einer "mathematischen nichtlinearen Optimierung" wird insbesondere eine skalare, oder auch vektorielle Zielfunktion einer oder mehrerer reeller, oder auch komplexer Variablen optimiert, wobei die Zielfunktion oder die Bereichsgrenzen nichtlinear, und somit nicht affin sind. Dabei können insbesondere Regularisierungen wie beim Levenberg-Marquardt-Algorithmus eingesetzt werden.

Das vorliegende Verfahren ist insbesondere dann erfolgreich, wenn die Annahme getroffen wird, dass die Objektgeschwindigkeit frei von Diskontinuitäten ist. Praktisch bedeutet das, dass angenommen wird, dass sich die Objektgeschwindigkeit weder schlagartig ändert noch, dass eine Vorwärtsgeschwindigkeit instantan sich in eine Rückwärtsgeschwindigkeit ändert.

Ein Kern der Erfindung beruht somit insbesondere darauf, dass durch diese Annahme mathematisch nichtlineare Optimierungen besonders erfolgreich sind.

In einer weiteren Ausführungsform wird als mathematisch nichtlineare Optimierung die sogenannte Tikhonov-Phillips-Regularisierung eingesetzt. Mit diesem mathematischen nichtlinearen Optimierungsverfahren konnte die Objektgeschwindigkeit vorliegend besonders gut abgeschätzt werden. Die Tikhonov-Phillips-Regularisierung kann dem Buch A. Rieder: Keine Probleme mit Inversen Problemen,Vieweg Verlag, 2003 entnommen werden.

Aufgrund dessen, dass gegebenenfalls der Bildausschnitt Teile der Umgebung aufweist, wobei diese Teile keinen Informationsgehalt über die Objektgeschwindigkeit aufweisen, kann ein Objektrahmen erfolgen, sodass das erste umgebungsbereinigte Radarbild und das zweite umgebungsbereinigte Radarbild als Bildausschnitt im Wesentlichen ein einzelnes Objektbild aufweisen.

Somit kann zusätzlich Rechenleistung eingespart werden, da der Bildausschnitt derart eingeschränkt wird, dass dieser im Wesentlichen nur noch Objektinformationen aufweist.

Als "Objektbild" sind insbesondere sämtliche Informationen der umgebungsbereinigten Radarbilder zu verstehen, welche mit dem Objekt und dessen Objektgeschwindigkeit in Bezug stehen.

In einer weiteren Ausführungsform wird ein Regularisierungsparameter abgeschätzt.

Mit Hilfe eines derartigen Regularisierungsparameters kann das mathematisch nichtlineare Optimieren deutlich verbessert beziehungsweise bei einer rechentechnischen Umsetzung deutlich beschleunigt werden, da die Lösung somit keine Unstetigkeitsstelle aufweist, welche zu einem sogenannten Overfitting führen würde und auch ein starkes Glätten der Lösung, bzw. eines Strafterms, wird ausgeschlossen.

Der Verlauf eines Regularisierungsparameters ist insbesondere L-förmig, wobei der beste Regularisierungsparameter an der stärksten Krümmung der L-förmigen Kurve gegeben ist. Sofern somit das Abschätzen des Regularisierungsparameters iterativ erfolgt, kann die L-förmige Kurve mittels einer Funktion angepasst (angefittet) und der Regularisierungsparameter der Stelle der stärksten Krümmung entnommen werden. Das entsprechende Abschätzen des Regularisierungsparameters kann insbesondere dem Artikel P. C. Hansen: Analysis of Discrete Ill-Posed Problems by Means of the L-Curve, SIAM Review, 24(4):561-580, 1992 entnommen werden, dessen diesbezüglicher Inhalt Bestandteil der vorliegenden Anmeldung ist.

In einem weiteren Aspekt wird die Aufgabe gelöst durch eine Vorrichtung, welche derart eingerichtet ist, dass ein zuvor beschriebenes Verfahren durchführbar ist.

In einer diesbezüglichen Ausgestaltungsform weist die Vorrichtung ein Synthetic-Apertur-Radar auf.

Zudem wird die Aufgabe gelöst durch ein Fluggerät, welches eine zuvor beschriebene Vorrichtung aufweist.

Im Weiteren wird die Erfindung anhand eines Ausführungsbeispiels näher erläutert.

Ein Flugzeug mit einem am Rumpf angeordneten Synthetic-Apertur-Radar fliegt auf einer Referenzbahn $\gamma_{\text{ref}}$ oberhalb des Erdbodens und nimmt dabei Radardaten auf. Diese Radardaten, ermittelt an verschiedenen Stellen der Antenne, werden rechentechnisch aufbereitet und mittels dem DPCA-Verfahren umgebungsbereinigt. Nach dem Umgebungsbereinigen beschreibt $d_{\text{DPCA}}^{(1)}$ die Daten, aus denen das spätere erste umgebungsbereinigte Radarbild generiert wird und $d_{\text{DPCA}}^{(2)}$ die Daten, aus denen später das zweite umgebungsbereinigte Radarbild erzeugt wird. Durch das Backprojection-Verfahren werden diese Daten jeweils in das erste umgebungsbereinigte Radarbild $V_{\text{DPCA}}^{(1)}$ und in das zweite umgebungsbereinigte Radarbild $V_{\text{DPCA}}^{(2)}$ überführt.

Das erste umgebungsbereinigte Radarbild sei $V_{\text{DPCA}}^{(1)}$ und das zweite umgebungsbereinigte Radarbild $V_{\text{DPCA}}^{(2)}$. Mit dem so genannten Backprojection-Verfahren wird unter Hinzunahme der Objektgeschwindigkeit $\boldsymbol{v}$ aus den mittels DPCAbereinigten Daten mittels Integration, bzw. Summation, ein umgebungsbereinigtes Radarbild gebildet durch

$$V_{\text{DPCA}}^{(2)}(\boldsymbol{x}) = \int_{\mathcal{L}} d_{\text{DPCA}}^{(1)} \left( \frac{2||\gamma_{\text{ref}}(s) - \boldsymbol{x} - \boldsymbol{v}(s)||_2}{c}, s \right)$$

$$\cdot \exp\left( 2\pi \mathrm{i} f_c \frac{2||\gamma_{\text{ref}}(s) - \boldsymbol{x} - \boldsymbol{v}(s)||_2}{c} \right) \mathrm{d}s.$$

Die Grundannahme lautet, dass durch das um die Geschwindigkeit $\boldsymbol{v}$ modifizierte Backprojection-Verfahren das erste umgebungsbereinigte Radarbild mit dem zweiten umgebungsbereinigten Radarbild nur dann identisch ist, wenn für jeden Ortsvektor $\boldsymbol{x}$ die geschätzte Objektgeschwindigkeit $\boldsymbol{v}$ gleich der wahren Geschwindigkeit des betrachteten Objekts ist. Dabei ist $\mathcal{L}$ das Zeitintervall, in dem die Radarbilder aufgenommen werden, $d_{\text{DPCA}}^{(1)}$ sind die umgebungsbereinigten Radardaten vor dem Backprojection-Verfahren. Die Referenzflugbahn des Flugzeuges ist $\gamma_{\text{ref}}$.

Die Variable $s$ wird als "slow-time" bezeichnet und "läuft" im Wesentlichen entlang der Aufnahmedauer und wäre bei einer optischen Kamera mit der Belichtungszeit vergleichbar.

Das $f_c$ ist die Trägerfrequenz des Synthetic-Apertur-Radars und c ist die Lichtgeschwindigkeit.

Die obige Gleichung wird in folgende, nichtlineare Operatorengleichung $V_{\text{DPCA}}^{(2)} = B_{d,\gamma}^{(1)}(\boldsymbol{v})$ überführt, wobei $\boldsymbol{d}$ die Kurzform der DPCA-Daten $d_{\text{DPCA}}^{(1)}$ und $\gamma$ die Kurzform der Referenzflugbahn $\gamma_{\text{ref}}$ ist. $B$ steht für die Backprojection-Operation, und somit für das Durchführen des Backprojection-Verfahrens.

Wird nun die partielle Ableitung nach dem Geschwindigkeitsvektor **v** am Boden durchgeführt ergibt eine Taylorapproximation

$$V_{\text{DPCA}}^{(2)} = B_{d,\gamma}^{(1)}(\boldsymbol{v}_0) + \partial_v B_{d,\gamma}^{(1)}(\boldsymbol{v}_0)(\boldsymbol{v} - \boldsymbol{v}_0) + \varepsilon$$

$$= V_{\text{DPCA}}^{(1)} + \partial_v B_{d,\gamma}^{(1)}(\boldsymbol{v}_0)(\boldsymbol{v} - \boldsymbol{v}_0) + \varepsilon.$$

Als Anfangslösung wird **v$_0$ = 0** gewählt, da die erste grundsätzliche Annahme darauf beruht, dass sich im Bild nichts bewegt. Es wird eine so genannte Updategeschwindigkeit **h := v - v$_0$** definiert, welche für jeden einzelnen Schritt einer geschätzten Geschwindigkeit entspricht.

Die Bildunterschiede werden als Residual $w$ bezeichnet, wobei $w := V_{\text{DPCA}}^{(2)} - V_{\text{DPCA}}^{(1)}$ ist. Um eine nichtlineare Optimierung durchführen zu können, werden die Fehlerterme $\varepsilon$ höherer Ordnung vernachlässigt, sodass sich die linearisierte Operatorgleichung $\partial_v B_{d,\gamma}^{(1)}(v_0)h = w$ ergibt. Der Operator lässt sich ermitteln durch

$$\partial_v B_{d,\gamma}^{(1)}(v_0) = \int_{\mathcal{L}} d_{\text{DPCA}}^{(1)} \left( \frac{2||\gamma_{\text{ref}}(s) - \boldsymbol{x}(s) - \boldsymbol{v}_0(s)||_2}{c}, s \right)$$

$$\cdot \frac{-4\pi i f_c}{c} \frac{\gamma_{\text{ref}}(s) - \boldsymbol{x}(s) - \boldsymbol{v}_0(s)}{2||\gamma_{\text{ref}}(s) - \boldsymbol{x}(s) - \boldsymbol{v}_0(s)||_2}$$

$$\cdot \exp\left( 2\pi i f_c \frac{2||\gamma_{\text{ref}}(s) - \boldsymbol{x} - \boldsymbol{v}_0(s)||_2}{c} \right) ds.$$

Vorliegend wurde die partielle Ableitung des Datenterms vernachlässigt, da die Änderung des Phasenterms deutlich größer als die Änderung in den Daten ist.

Das Integral der Geschwindigkeit **v** über die Zeit, wobei **v** die Lösung des Problems $\partial_v B_{d,\gamma}^{(1)}(v_0)h = w$ mit **h := v - v$_0$** ist, liefert die gewünschte vektorielle Objektbewegung $m(s) = \int_{\mathcal{L}} v(s) ds + c_0$.

Mithin beschreibt **m** die Bewegung eines Pixels, bzw. insbesondere die Bewegung des gesamten Bildausschnittes oder des gesamten Bildes. Es sei angemerkt, dass **c$_0$** immer $(0,0)^T$ ist, da dies der Position des Objekts beim Beginn des betrachteten Intervalls im lokalen Bild entspricht.

Das inverse Problem $\partial_v B_{d,\gamma}^{(1)}(v_0)h = w$ ist schlecht gestellt und wird vorliegend regularisiert. Unter "schlecht gestellt" wird vorliegend insbesondere verstanden, dass es zwei oder mehr Lösungen gibt.

Vorliegend wurde die Tikhonov-Phillips-Regularisierung verwendet. Es wird das Vorwissen eingebracht, dass sich das Objekt nicht sprunghaft bewegen kann. Somit garantiert der Gradient der Geschwindigkeit im Strafterm eine glatte Geschwindigkeit und somit eine kontinuierliche Bewegung. Somit lautet das Minimierungsfunktional

$$\min_{\boldsymbol{h}} \left\{ ||\partial_v B_{d,\gamma}^{(1)}(v_0)\boldsymbol{h} - w||_2^2 + \alpha ||\nabla \boldsymbol{h}||_2^2 \right\}.$$

Die diskrete Lösung der vorherigen Minimierungsaufgabe ist **h**$_\alpha$ = $(B^T B + \alpha D^T D)^{-1} 2(B^T w)$, wobei $D$ die finite Differenzenmatrix ist, welche den diskreten Gradienten $\nabla$ repräsentiert. Die Matrix $B$ ist der diskrete linearisierte Systemoperator $\partial_v B_{d,\gamma}(v_0)$. Die Lösung **h**$_\alpha$ existiert und ist eindeutig, da die regularisierte Matrix $B^T B + \alpha D^T D$ invertierbar ist.

Die Berechnung der Lösung **h**$_\alpha$ erfolgt vorliegend iterativ, sodass sich die Qualität der Lösung verbessert. Nur ein einziges $\alpha$ führt zur optimalen Lösung, welche am ähnlichsten mit der wahren Bewegung ist.

Die Wahl des Regularisierungsparameters erfolgt dadurch, dass a-priori eine Eigenwertanalyse durchgeführt wird und anschließend nachträglich das heuristische Kriterium der L-Kurve nach P.C. Hansen: Analysis of Discrete Ill-Posed Problems by Means oft he L-Curve, SIAM Review, 24(4):561-580, 1992 angewendet wird.

Die vorherigen mathematischen Verfahren werden in Software abgebildet und mittels Rechner umgesetzt.

**Patentansprüche**

1. Verfahren zum Bestimmen einer Objektgeschwindigkeit eines Objekts mittels Daten eines Synthetic-Apertur-Radars, wobei ein Ermitteln eines ersten umgebungsbereinigten Radarbildes und eines zweiten umgebungsbereinigten Radarbildes anhand der Daten des Synthetic-Apertur-Radars erfolgt und das erste umgebungsbereinigte Radarbild und das zweite umgebungsbereinigte den selben Bildausschnitt aufweisen, wobei das zweite umgebungsbereinigte Radarbild aus zweiten Bilddaten mittels eines Backprojection-Verfahrens ermittelt wird, **dadurch gekennzeichnet, dass** das Ermitteln des ersten umgebungsbereinigten Radarbilds anhand erster Bilddaten rechentechnisch unter der Annahme erfolgt, dass durch ein Objektgeschwindigkeits-kompensierendes Verschieben des Objekts das erste umgebungsbereinigte Radarbild mit dem zweiten umgebungsbereinigten Radarbild deckungsgleich ist, wobei beim Objektgeschwindigkeits-kompensierenden Verschieben die Objektgeschwindigkeit abgeschätzt wird, sodass ein Wert für die Objektgeschwindigkeit vorliegt.

2. Verfahren nach Anspruch 1, **dadurch gekennzeichnet, dass** das erste umgebungsbereinigte Radarbild und das zweite umgebungsbereinigte Radarbild mit einem definierten Zeitversatz ermittelt und/oder dass das erste umgebungsbereinigte Radarbild und/oder das zweite umgebungsbereinigte Radarbild rechentechnisch derart verschoben werden, so dass das erste umgebungsbereinigte Radarbild und das zweite umgebungsbereinigte Radarbild den selben Bildausschnitt aufweisen.

3. Verfahren nach einem der vorherigen Verfahren, **dadurch gekennzeichnet, dass** das Objektgeschwindigkeits-kompensierende Verschieben durch ein Verschieben der ersten Bilddaten und/oder durch ein Verwenden eines modifizierten Backprojection-Verfahrens erfolgt.

4. Verfahren nach einem der vorherigen Ansprüche, **dadurch gekennzeichnet, dass** das Abschätzen der Objektgeschwindigkeit mittels mathematischer Optimierung, insbesondere durch lineare oder nichtlineare Optimierung, insbesondere mittels mathematischer Regularisierung, erfolgt.

5. Verfahren nach einem der vorherigen Ansprüche, **dadurch gekennzeichnet, dass** das Objektgeschwindigkeits-kompensierenden Verschieben unter einer Annahme erfolgt, dass die Objektgeschwindigkeit frei von Diskontinuitäten ist.

6. Verfahren nach einem der vorherigen Ansprüche, **dadurch gekennzeichnet, dass** das Abschätzen der Objektgeschwindigkeit iterativ erfolgt.

7. Verfahren nach einem der vorherigen Ansprüche, **dadurch gekennzeichnet, dass** die mathematische Optimierung eine Tikhonov-Phillips Regularisierung ist.

8. Verfahren nach einem der vorherigen Ansprüche, **dadurch gekennzeichnet, dass** das ein Objektrahmen erfolgt, sodass das erste umgebungsbereinigte Radarbild und das zweite umgebungsbereinigte Radarbild als Bildausschnitt im Wesentlichen ein Objektbild aufweisen.

9. Verfahren nach einem der vorherigen Ansprüche, **dadurch gekennzeichnet, dass** ein Regularisierungsparameter abgeschätzt wird.

10. Verfahren nach Anspruch 9, **dadurch gekennzeichnet, dass** das Abschätzen des Regularisierungsparameters iterativ erfolgt.

11. Vorrichtung, welche derart eingerichtet ist, dass ein Verfahren nach einem der vorherigen Ansprüche durchführbar ist.

12. Vorrichtung nach Anspruch 11, **dadurch gekennzeichnet, dass** die Vorrichtung ein Synthetic-Apertur-Radar umfasst.

Europäisches
Patentamt

European
Patent Office

Office européen
des brevets

**EUROPÄISCHER RECHERCHENBERICHT**

Nummer der Anmeldung

EP 18 17 4579

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | M.I. PETTERSSON: "Detection of moving targets in wideband SAR", IEEE TRANSACTIONS ON AEROSPACE AND ELECTRONIC SYSTEMS, Bd. 40, Nr. 3, 1. Juli 2004 (2004-07-01), Seiten 780-796, XP055171752, ISSN: 0018-9251, DOI: 10.1109/TAES.2004.1337454 * das ganze Dokument * ----- | 1-12 | INV. G01S13/90 ADD. G01S13/58 |
| A | US 6 518 914 B1 (PETERSON MATS [SE] ET AL) 11. Februar 2003 (2003-02-11) * das ganze Dokument * ----- | 1-12 | |
| A | SJOGREN THOMAS K ET AL: "Suppression of Clutter in Multichannel SAR GMTI", IEEE TRANSACTIONS ON GEOSCIENCE AND REMOTE SENSING, IEEE SERVICE CENTER, PISCATAWAY, NJ, US, Bd. 52, Nr. 7, 1. Juli 2014 (2014-07-01), Seiten 4005-4013, XP011541426, ISSN: 0196-2892, DOI: 10.1109/TGRS.2013.2278701 [gefunden am 2014-02-28] * Abbildung 7 * ----- | 1-12 | |
| | | | RECHERCHIERTE SACHGEBIETE (IPC) |
| | | | G01S |
| A | VIET T VU ET AL: "Fast detection of moving targets by focusing in multi-channel Ultra-wideband SAR", RADAR CONFERENCE, 2009. EURAD 2009. EUROPEAN, IEEE, PISCATAWAY, NJ, USA, 30. September 2009 (2009-09-30), Seiten 218-221, XP031558416, ISBN: 978-1-4244-4747-3 * das ganze Dokument * ----- | 1-12 | |

-/--

Der vorliegende Recherchenbericht wurde für alle Patentansprüche erstellt

| Recherchenort | Abschlußdatum der Recherche | Prüfer |
|---|---|---|
| München | 9. November 2018 | Rudolf, Hans |

EPO FORM 1503 03.82 (P04C03)

Europäisches Patentamt
European Patent Office
Office européen des brevets

## EUROPÄISCHER RECHERCHENBERICHT

Nummer der Anmeldung

EP 18 17 4579

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | MATS I PETTERSON: "Focusing of Moving Targets in an Ultra-Wideband SAR Gmti System", PROCEEDINGS OF EUSAR 2000 : 23 - 25 MAY 2000, MUNICH, GERMANY / 3RD EUROPEAN CONFERENCE ON SYNTHETIC APERTURE R, BERLIN : VDE-VERL, 1. Januar 2000 (2000-01-01), Seiten 837-840, XP009155427, ISBN: 3-8007-2544-4 * das ganze Dokument *<br><br>----- | 1-12 | |
| A | DEMING ROSS ET AL: "Simultaneous SAR and GMTI using ATI/DPCA", VISUAL COMMUNICATIONS AND IMAGE PROCESSING; 20-1-2004 - 20-1-2004; SAN JOSE,, Bd. 9093, 13. Juni 2014 (2014-06-13), Seiten 90930U-90930U, XP060037456, DOI: 10.1117/12.2058264 ISBN: 978-1-62841-730-2 * das ganze Dokument *<br><br>----- | 1-12 | |
| A | US 6 441 772 B1 (HELLSTEN HANS [SE] ET AL) 27. August 2002 (2002-08-27) * das ganze Dokument *<br><br>----- | 1-12 | |

**RECHERCHIERTE SACHGEBIETE (IPC)**

Der vorliegende Recherchenbericht wurde für alle Patentansprüche erstellt

| Recherchenort | Abschlußdatum der Recherche | Prüfer |
|---|---|---|
| München | 9. November 2018 | Rudolf, Hans |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

EPO FORM 1503 03.82 (P04C03)

Seite 2 von 2

**ANHANG ZUM EUROPÄISCHEN RECHERCHENBERICHT
ÜBER DIE EUROPÄISCHE PATENTANMELDUNG NR.**

EP 18 17 4579

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-11-2018

| Im Recherchenbericht angeführtes Patentdokument | | Datum der Veröffentlichung | Mitglied(er) der Patentfamilie | | Datum der Veröffentlichung |
|---|---|---|---|---|---|
| US 6518914 | B1 | 11-02-2003 | CA | 2427606 A1 | 10-05-2002 |
| | | | EP | 1337874 A1 | 27-08-2003 |
| | | | US | 6518914 B1 | 11-02-2003 |
| | | | WO | 0237137 A1 | 10-05-2002 |
| US 6441772 | B1 | 27-08-2002 | AT | 290222 T | 15-03-2005 |
| | | | DE | 69924011 D1 | 07-04-2005 |
| | | | DE | 69924011 T2 | 09-02-2006 |
| | | | EP | 1141748 A1 | 10-10-2001 |
| | | | JP | 4917206 B2 | 18-04-2012 |
| | | | JP | 2002533685 A | 08-10-2002 |
| | | | SE | 511952 C2 | 20-12-1999 |
| | | | US | 6441772 B1 | 27-08-2002 |
| | | | WO | 0037965 A1 | 29-06-2000 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **R.W. DEMING et al.** Three-channel processing for improved geo-location performance in SAR-based GMTI interferometry. *SPIE Proceedings Vol. 8394: Algorithms for Synthetic Aperture Radar Imagery,* 2012, vol. XIX
- **C. E. MUEHE et al.** *Displaced-Phase-Center Antenna Technique, Lincoln Laboratory Journal,* 2000, vol. 12 (2
- **G. W. STIMSON et al.** Stimson's Introduction to Airborne Radar. 2014
- **A. W. DOERRY et al.** Backprojection-Verfahren. *Basics of Backprojection Algorithm for Processing Synthetic Aperture Radar Images,* 2016
- **M. RICHARDS.** Fundamentals of Radar Signal Processing. McGraw Hill, 2005
- **C. H. GIERULL.** Digital Channel Balancing of Along-Track Interferometric SAR Data. *Defence R & D Canada, Technical Memorandum, DRDC Ottawa,* 2003
- Buch A. Rieder: Keine Probleme mit Inversen Problemen. Vieweg Verlag, 2003
- **P. C. HANSEN.** Analysis of Discrete Ill-Posed Problems by Means of the L-Curve. *SIAM Review,* 1992, vol. 24 (4), 561-580
- **P.C. HANSEN.** Analysis of Discrete Ill-Posed Problems by Means oft he L-Curve. *SIAM Review,* 1992, vol. 24 (4), 561-580